# EUROPEAN PATENT APPLICATION

(11) **EP 4 442 739 A1**
(43) Date of publication of application: **09.10.2024**
(21) Application number: 24167151.0
(22) Date of filing: 28.03.2024
(51) Int. Cl.: C08J 3/22, C08J 5/04, C08K 3/013, C08K 3/04, C08K 7/02, C08L 55/02, C08L 69/00

(54) **MASTER BATCH, REGENERATED PLASTIC, AND METHOD OF MANUFACTURING REGENERATED PLASTIC**

(30) Priority: 04.04.2023 JP 2023060859
(71) Applicant: Ricoh Company, Ltd., Tokyo 143-8555 (JP)
(72) Inventor: SUZUKI, Akira, Tokyo, 143-8555 (JP)
(74) Representative: SSM Sandmair

(57) **Abstract**

A master batch (5) is provided that comprises a thermoplastic resin (4), a function-imparting agent (2) that imparts the specific function to the resin composition; and recycled carbon fibers (3) recovered from carbon fiber reinforced plastic (CFRP).

## Description

### BACKGROUND

### Technical Field

The present disclosure relates to a master batch, regenerated plastic, and a method of manufacturing regenerated plastic.

### Related Art

Conventionally, new plastic (virgin plastic) has been used as a plastic material for printer and other applications, but in recent years, from an environmental viewpoint, regenerated plastic, which is plastic that has been used once but is recovered and used again, has been widely used.

Regenerated plastic is generally prepared by adding additives to recovered plastic recovered from various industries as a base for a purpose of improving its quality to make it in a state capable of being used again.

On the other hand, in recent years, there has been a demand for a concept originally possessed by the term "recycling", that is, so-called closed recycling in which characteristics substantially equivalent to the characteristics originally possessed by the material before regeneration are also achieved in the material after regeneration. Further, it is one of preferred points for promoting the construction of a recycling-oriented society to be able to add further characteristics to a material in addition to maintaining the original characteristics at the time of recycling.

As a form of closed recycling, for example, in a case of multi-functional printers (hereinafter also referred to as MFPs), there is a form in which plastic parts and other parts are recovered from a company's own product recovered from the market, additives are added to the recovered plastic as a base for a purpose of improving quality, regenerated plastic is manufactured, and products are manufactured using the regenerated plastic. This is recycling of a circulation type in which plastics of a company's own product are recovered and a new company's own product is manufactured again.

Japanese Unexamined Patent Publication No. 2005-254693 discloses that regenerated plastic is manufactured by recovering plastic members from waste household electric appliances, pulverizing the plastic members, subjecting the pulverized products to a wet foreign matter removal process, removing foreign matter from the pulverized products by air separation, float-and-sink separation, and centrifugal dehydration separation in this order, and adding additives including an antioxidant to the pulverized plastics from which foreign matter has been removed.

Japanese Unexamined Patent Publication No. 2006-206806 describes a recycled resin composition that is a resin composition in which a fluidity improver (B) is blended with an aromatic polycarbonate ingredient (A) containing a crushed product (a1) of an aromatic polycarbonate resin-based molded article which is a recycled plastic, wherein the fluidity improver (B) is a monomer mixture comprising 0.5% to 99.5% by mass of an aromatic vinyl monomer (b1), 0.5% to 99.5% by mass of a monomer (b2) having a specific structure, and 0% to 40% by mass of another monomer (b3) (wherein the total of the monomers (b1) to (b3) is 100% by mass).

For example, in order to realize closed recycling of MFPs, plastic is recovered from used MFPs, regenerated plastic is manufactured from the recovered plastic, and plastic products are manufactured from the regenerated plastic.

However, in general, plants that manufacture regenerated plastic from recovered plastic and plants that manufacture plastic products from the regenerated plastic is distant from each other, and it takes time to transport the materials. Therefore, there are disadvantages related to delivery dates, such as delays in the delivery date of a product or inability to set a fixed delivery date.

### SUMMARY

An object of the present invention is to provide a master batch capable of contributing to resource recycling activities and delivering products having excellent bending strength and tensile strength in a short time, which is used when plastic is recovered from used products containing plastic, the recovered plastic is converted into regenerated plastic, and products are manufactured from the regenerated plastic.

Embodiments of the present invention provides a master batch comprising a thermoplastic resin, a function-imparting agent, and recycled carbon fibers recovered from carbon fiber reinforced plastic (CFRP).

The use of the master batch according to embodiments of the present invention makes it possible to contribute to resource recycling activities and deliver products having excellent bending strength and tensile strength in a short time, when plastic is recovered from products containing plastic, the recovered plastic is converted into regenerated plastic, and products are manufactured from the regenerated plastic.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram for explaining a conventional recycling method;
FIG. 2 is a diagram for explaining a recycling method according to an embodiment of the present invention;
FIG. 3 is a diagram for explaining a recycling method according to an embodiment of the present invention;
FIG. 4A is a schematic diagram illustrating a configuration of conventional regenerated plastic; and
FIG. 4B is a schematic diagram illustrating a configuration of regenerated plastic according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

Embodiments of the present invention will be described.

Hereinafter, plastic recovered from a product is referred to as "recovered plastic", and plastic obtained by adding additives to the "recovered plastic" to improve its quality is referred to as "regenerated plastic".

The applicant company has continued to carry out recycling of a circulation type, and has already carried out a resource circulation activity of regenerated plastic materials called plastic closed-loop material recycling (PCMR), in which used MFPs (multifunctional printers) and other products are recovered, plastic parts are manually sorted, and the recovered plastic is used again in its own products.

However, until now, in the resource circulation activity of plastic closed-loop material recycling (PCMR) in which used MFPs manufactured by the applicant company are recovered and converted into a regenerated material, the disadvantages relating to the delivery date as described above have been serious.

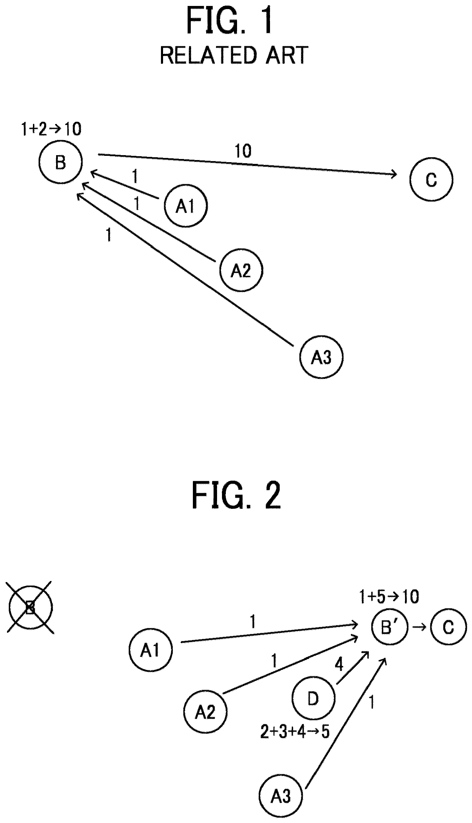

The reason why such disadvantages relating to the delivery date occur will be described with reference to FIG. 1.

In FIG. 1, A (collectively including A1, A2, and A3), B, and C represent the following.

A: A recovery plant that accumulates plastic recovered from used MFPs and manufactures recovered plastic.

B: A regeneration plant that manufactures regenerated plastic from the recovered plastic transported from the recovery plant.

C: A part manufacturing plant that manufactures printer parts from the regenerated plastic transported from the regeneration plant.

The location relationship of A, B, and C on the drawing represents the location relationship on a map.

The recycling is performed as follows.

First, plastic recovered from used MFPs is accumulated in the recovery plant A. In the recovery plant A, recovered plastic 1 is manufactured from the plastic having been recovered.

For example, used MFPs recovered can be accumulated in a plurality of recovery plants A, such as A1, A2 and A3.

Next, the recovered plastic 1 is transported to the regeneration plant B. In the regeneration plant B, additives are added to the recovered plastic 1 to improve the quality of the recovered plastic 1, and regenerated plastic 10 that is in a state capable of being used as a product again is manufactured.

Further, for the purpose of manufacturing MFP parts from the regenerated plastic 10 which has been improved in quality and is in a state capable of being used again, the regenerated plastic 10 is transported to the part manufacturing plant C that manufactures MFP parts.

That is, the resource circulation activity of the plastic closed-loop material recycling (PCMR) is performed by the following steps (1) to (3).
(1) Plastic recovered from used MFPs is accumulated in a recovery plant, and the recovered plastic is manufactured in the recovery plant.
(2) The recovered plastic is transported from the recovery plant A to the regeneration plant B, and regenerated plastic is manufactured in the regeneration plant B.
(3) The regenerated plastic is transported from the regeneration plant B to the part manufacturing plant C that manufactures printer parts, and the printer parts are manufactured from the regenerated plastic in the part manufacturing plant C.

As described above, in the process of recovering plastic, regenerating plastic, and manufacturing parts from regenerated plastic, there have been disadvantages that delivery dates are delayed and cannot be fixed because there are many transport operations and it takes many days for transportation.

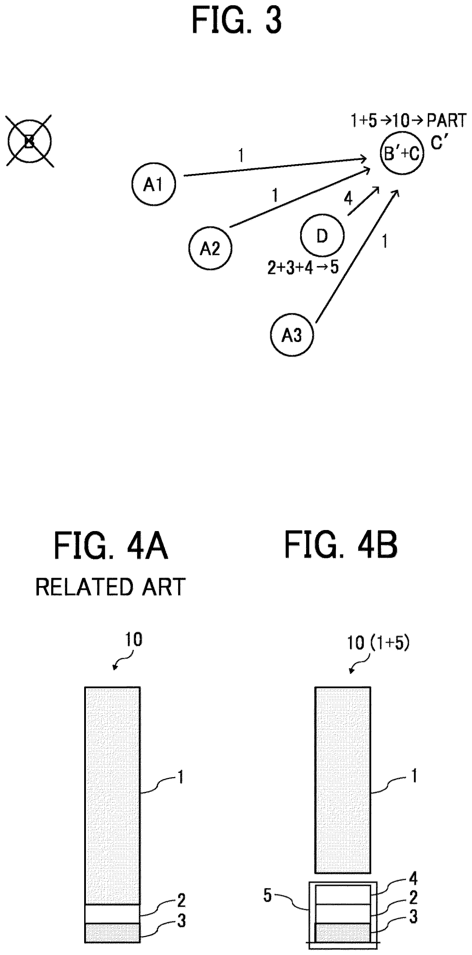

The flow of materials in the conventional regenerated plastic manufacturing will be described with reference to FIGS. 1 and 4A.

The recovered plastic 1 manufactured in the recovery plant A is transported to the regeneration plant B, and a function-imparting agent 2 is blended with the recovered plastic 1 in the regeneration plant B to manufacture the regenerated plastic 10. By blending the function-imparting agent into the recovered plastic 1, the regenerated plastic 10 with improved quality can be manufactured. Then, the regenerated plastic 10 is transported to the part manufacturing plant C, and parts for printers and other products can be manufactured in the part manufacturing plant C.

Examples of the function-imparting agent include, but are not limited to, the following (1) to (3).
(1) An impact modifier: an additive that improves impact strength.
(2) A flame retardant: an additive that makes regenerated plastic flame retardant (less flammable).
(3) Recycled carbon fibers: an additive that improves mechanical strength (bending strength, tensile strength).

However, in the manufacturing flow of the regenerated plastic presented in FIG. 1, as described above, there are many transportation operations in the recovery, regeneration, and part manufacturing, and the transportations take days.

FIG. 4A is a schematic diagram illustrating the regenerated plastic 10 manufactured in the regeneration plant B of FIG. 1.

FIG. 2 is a schematic diagram illustrating a flow of recycling when parts are manufactured using a master batch according to embodiments of the present invention.

First, plastic recovered from used plastic products is once accumulated in the recovery plants A (A1, A2, and A3). In the recovery plants A, the recovered plastic 1 is manufactured from the recovered plastic. The recovered plastic 1 manufactured in the recovery plants A is transported from the recovery plants A to a regeneration plant B'.

The regeneration plant B' and the part manufacturing plant C can be located at such a distance from each other that there is no burden on transportation.

On the other hand, a master batch manufacturing plant D that manufactures a master batch 5 by blending the function-imparting agent 2 and recycled carbon fibers 3 with a thermoplastic resin 4 is newly provided. The master batch 5 manufactured in the master batch manufacturing plant D is transported to the regeneration plant B'.

The regenerated plastic 10 is manufactured by kneading the recovered plastic 1 and the master batch 5 in the regeneration plant B', and parts are manufactured from the regenerated plastic 10 in the part manufacturing plant C.

Since the regeneration plant B' can manufacture the regenerated plastic only by simply kneading the recovered plastic 1 and the master batch 5 (i.e., blending materials), the facilities are simpler than those of a conventional regeneration plant.

FIG. 4B is a schematic diagram illustrating the regenerated plastic 10 manufactured using the master batch 5 of the present embodiment.

The master batch 5 of the present embodiment is obtained by mixing the thermoplastic resin 4, the function-imparting agent 2, and the recycled carbon fibers 3.

Although the recycled carbon fibers 3 can serve as the function-imparting agent 2, the master batch 5 of the present embodiment contains the recycled carbon fibers 3 as an essential component, and therefore the recycled carbon fibers 3 are not included in the meaning of function-imparting agent 2.

The regenerated plastic 10 is manufactured by mixing the resin composition 1 as a base of the regenerated plastic 10 with the master batch 5 of the present embodiment.

As will be described below, the resin composition 1 is preferably the recovered plastic or a resin composition containing recovered plastic, but when the amount of the recovered plastic is insufficient, a virgin material can be used.

In the present embodiment, a resin composition to which a master batch is blended is referred to as regenerated plastic even when the resin composition is a virgin material.

Hereinafter, the present embodiment will be described with reference to an example in which the recovered plastic 1 is used as the resin composition 1.

The recovered plastic 1 manufactured in the recovery plant A is gathered in the regeneration plant B' that manufactures the regenerated plastic 10, and the master batch 5 manufactured in the master batch manufacturing plant D is also gathered in the regeneration plant B'.

Then, in the regeneration plant B', the recovered plastic 1 and the master batch 5 are kneaded to manufacture the regenerated plastic 10.

As described above, by using the master batch 5 of the present embodiment, the regenerated plastic can be manufactured by individually sending the recovered plastic 1 and the master batch 5 to the regeneration plant B' and simply kneading the master batch 5 and the recovered plastic 1 (i.e., blending the materials).

As a result, the existing regeneration plant that manufactures the regenerated plastic 10 by blending the function-imparting agent with the recovered plastic 1 becomes unnecessary.

FIG. 2 is a schematic diagram illustrating an example in which the regeneration plant B' and the part manufacturing plant C are located close to each other.

FIG. 3 is a schematic diagram illustrating an example in which a regeneration and part manufacturing plant C' is provided in which the regeneration plant B' and the part manufacturing plant C are located in the same site.

The recovered plastic 1 manufactured in the recovery plant A is gathered in the regeneration plant B' of the regeneration and part manufacturing plant C' that manufactures the regenerated plastic 10, and the master batch 5 manufactured in the master batch manufacturing plant D is also gathered in the regeneration plant B'.

Then, in the regeneration plant B', the master batch 5 and the recovered plastic 1 are kneaded to manufacture the regenerated plastic 10.

As described above, by using the master batch 5 of the present embodiment, the regenerated plastic can be manufactured by individually sending the recovered plastic 1 and the master batch 5 to the regeneration and part manufacturing plant C' and simply kneading the master batch 5 and the recovered plastic 1 (i.e., blending the materials).

As described above, since the regenerated plastic 10 can be manufactured only by kneading the recovered plastic 1 and the master batch 5, a regeneration plant therefor does not require special facilities. Therefore, it is possible to build regeneration plants in many places in a country. Further, since the regenerated plastic can be manufactured near a plant that manufactures parts in the next process, the delivery date can be shortened.

In addition, since the master batch 5 and the recovered plastic 1 can be individually sent to the place where the regenerated plastic 10 is manufactured, the ratio of the recovered plastic 1 and the ratio of the function-imparting agent can be appropriately adjusted in the regeneration plant B'.

Further, recycled carbon fibers, which are one of the function-imparting agents, are often recovered and manufactured from waste materials of automobiles. Therefore, the master batch of the present embodiment can also be manufactured, for example, in Nagoya of Japan or the like where there are many automobile companies. Thus, the delivery date can be shortened.

### (Master Batch)

The master batch of the present embodiment contains a thermoplastic resin (a), a function-imparting agent (b), and recycled carbon fibers (c).

The thermoplastic resin (a)) may be a new plastic material (virgin material), a part thereof may be recovered plastic, or the entire thereof may be recovered plastic. It is preferable that the thermoplastic resin (a) is a new plastic (virgin material).

The reason why it is preferable to use a virgin material as the thermoplastic resin (a) is that recovered plastic has a thermal history after being used once, and thus generally has a large variation in quality. In particular, when its fluctuation in viscosity is large, it is difficult to homogeneously disperse the function-imparting agent (b) in the thermoplastic resin (a), the quality of the master batch is lowered, and as a result, the function-imparting agent cannot be homogeneously dispersed in the regenerated plastic 10 obtained by mixing the master batch with the recovered plastic 1.

As the thermoplastic resin (a), polycarbonate (PC) / acrylonitrile-butadiene-styrene (ABS) is preferably used.

### <Function-Imparting Agent>

The function-imparting agent (b) in the master batch of the present embodiment is a component for improving the quality of the regenerated plastic.

Examples of the function-imparting agent (b) include the following (b1) and (b2), as described above.
(b1) An impact modifier: an additive that improves impact strength.
(b2) A flame retardant: an additive that makes regenerated plastic flame retardant (less flammable).

The function-imparting agent will be described below.

### (b1) Impact Modifier

The impact modifier is an additive that improves impact strength, and an example thereof is METABLEN (registered trademark), which is an impact strength modifier manufactured by Mitsubishi Chemical Corporation.

METABLEN is a core-shell type impact resistant modifier having a graft layer on the outside of a particulate rubber, and by selecting the components of the rubber, it is possible to impart performance such as weather resistance in addition to impact strength, and depending on the grade, it is possible to impart flame retardancy and sliding characteristic.

As the material of the rubber, butadiene rubber, acrylic rubber, or silicone-acrylic composite rubber is used.

For the impact strength, an impact test is performed using a Charpy impact tester in accordance with the ISO 179-1 corresponding to the Charpy impact strength test.

The test piece was formed to have a notch (cut), and evaluated in a manner that as the value of the Charpy impact strength (kJ/m²) was higher, the impact resistance was better.

### (b2) Flame Retardant

The flame retardant is an additive that makes regenerated plastic flame retardant (less flammable).

As the flame retardant, various flame retardants such as a halogen-based flame retardant and a phosphorus-based flame retardant can be used.

The flame retardant is preferably a phosphorus-based compound, and is preferably a phosphazene-based compound. The phosphorus-based compound preferably contains a phosphazene-based compound and a phosphorus-based compound other than the phosphazene-based compound.

As an example, the following phosphorus-based compounds can be used.
- Phosphazene-based compound: SPS 100
   (manufactured by Otsuka Chemical Co., Ltd., an aromatic phosphazene compound having a 6-membered ring structure as a main component, in which all six side chains are phenoxy groups)
- Phosphate ester: PX-200
   (manufactured by Daihachi Chemical Industry Co., Ltd., aromatic condensed phosphate ester, melting point: 92°C or higher)

A flame retardancy test is performed in accordance with the UL94 test (combustion test for plastic materials for equipment parts) released by Underwriters Laboratories (UL) of the United States.

As an example of the thickness t of the test piece, 1.5 mm is used. The UL94V test is performed to determine "V-0", "V-1", or "V-2".

### <Recycled Carbon Fibers>

The recycled carbon fibers can be obtained from companies and research institutions listed in "Domestic and foreign companies and research institutes commercialising CFRP recycling" in Table 2-2 of the following publication: "FY2020 Research Commissioning Fees Contributing to Global Warming and Resource Recycling Countermeasures, International Trend Research on Utilization and Evaluation Methods of Recycled Carbon Fibers", Yano Research Institute Ltd., Mar. 26, 2021.

The recycled carbon fibers can be obtained from the companies and research institutes commercialising CFRP recycling listed in Table 2-2 of the above-mentioned research paper.

As an example, recycled carbon fibers manufactured by Carbon Fiber Recycle Industry Co., Ltd. can be used.

The form of the recycled carbon fibers may be fibrous (chopped) recycled carbon fibers or milled recycled carbon fibers.

When milled recycled carbon fibers are used, the final product shape has no problem in shrinkage.

The recycled carbon fibers are selected on the background of the quality required for products such as printers.

### <Thermoplastic Resin>

As the thermoplastic resin (a), the following can be used.

### «PC Resin»

The PC (polycarbonate) resin may be, for example, an aromatic homopolycarbonate resin or copolycarbonate resin obtained by reacting an aromatic dihydric phenol-based compound with phosgene or a carbonic acid diester. Examples of the aromatic dihydric phenol-based compound include, but are not limited to, 2,2-bis (4-hydroxyphenyl) propane, 2,2-bis (4-hydroxy-3,5-dimethylphenyl) propane, bis (4-hydroxyphenyl) methane, 1,1-bis (4-hydroxyphenyl) ethane, 2,2-bis (4-hydroxyphenyl) butane, 2,2-bis (4-hydroxy-3,5-diphenyl) butane, 2,2-bis (4-hydroxy-3,5-diethylphenyl) propane, 2,2-bis (4-hydroxy-3,5-diethylphenyl) propane, 1,1-bis (4-hydroxyphenyl) cyclohexane, and 1-phenyl-1,1-bis (4-hydroxyphenyl) ethane. Each of these may be used alone or as a mixture with others.

### «ABS Resin»

The method for producing the ABS (acrylonitrile-butadiene-styrene) resin is not particularly limited. Examples thereof include, but are not limited to: an emulsion polymerization method in which emulsified styrene and acrylonitrile monomers are mixed with emulsified rubber to be polymerized; and a bulk suspension polymerization method in which a rubber is made to dissolve in styrene and acrylonitrile monomers to cause bulk polymerization and this polymerization liquid is made to suspend in water during the polymerization to continue the polymerization under suspension polymerization conditions. When a PC resin, a PVC (polyvinylchloride) resin, a PBT (polybutylene terephthalate) resin, or the like is alloyed, a polymerization method is selected according to the properties of the ABS resin used. In general, the ABS resin is capable of alloying regardless of whether it is produced by the emulsion polymerization method or the bulk suspension polymerization method.

As the PC resin and ABS resin, a copolymer of PC/ABS may be used.

Also, PC/ABS recovered materials are used.

The recovered materials are plastics recovered from products such as the company's own printers, but may be market recovered materials recovered from the market, and may include, for example, regenerated materials from household appliances such as air conditioners, televisions, refrigerators, washing machines, and used office automation equipment.

Further, the master batch according to the present embodiment has an effect of shortening the delivery date in terms of production bases in a country.

The raw material of the recycled carbon fiber is automobiles or aircrafts, and the CFRP is recovered as a waste material in the manufacturing process thereof, and is recycled and used.

For example, since the Chubu area in Japan is the largest domestic manufacturing base of aircraft and the largest domestic accumulation area of automobile related companies, and advanced recyclers, universities, and research institutes exist therein, manufacturing master batches in the vicinity of the area leads to shortening of delivery date.

### (Resin Composition)

The regenerated plastic is manufactured by kneading the resin composition and the master batch of the present embodiment.

The resin composition used for manufacturing the regenerated plastic may be a new plastic material (virgin material), a part thereof may be recovered plastic, or the entire thereof may be recovered plastic.

Note that "regenerated" is indicated for the regenerated plastic because the recycled carbon fibers are used as recycled products.

### (Product Using Regenerated Plastic)

Examples of products manufactured using the regenerated plastic include, but are not limited to, members for information and mobile devices such as computers, notebook personal computers, tablet terminals, smartphones, and mobile phones, and office automation equipment such as printers and copiers. In particular, the regenerated plastic is suitably used for members requiring an impact function and suppression of heat resistance.

An example of the molded article of the regenerated plastic can be obtained by injection molding according to a conventional method.

### (Method of Manufacturing Master Batch)

The regenerated plastic can be manufactured by kneading the master batch of the present embodiment and the resin composition.

The ratio of the master batch in the regenerated plastic can be appropriately selected to realize the required characteristics of a product such as a printer.

### [Example]

Hereinafter, as one embodiment, manufacturing of regenerated plastic in a case where 20% by mass of a master batch and 80% by mass of a resin composition are used as a base ratio will be described as an example.

### [Manufacturing of Master Batch]

As the function-imparting agent, the following flame retardant, impact modifier, recycled carbon fibers, and thermoplastic resin were used.

### (Flame Retardant)

As the flame retardant, a phosphazene compound, phosphate ester (PX-200) manufactured by Daihachi Chemical Industry Co., Ltd. was used.

The content of the flame retardant in the master batch is suitably 5% by mass or more and 25% by mass or less, and was set to 8% by mass here.

### (Impact Modifier)

As the impact modifier, an impact strength modifier (METABLEN) manufactured by Mitsubishi Chemical Corporation was used. The content of the impact modifier in the master batch is suitably 5% by mass or more and 25% by mass or less, and was set to 7% by mass here.

### (Recycled Carbon Fibers)

As the recycled carbon fibers, recycled carbon fibers manufactured by Carbon Fiber Recycle Industry Co., Ltd. were used.

Here, the recycled carbon fibers used were milled fibers.

The content of the recycled carbon fibers in the master batch is suitably 15% by mass or more and 50% by mass or less, and was set to 25% by mass here.

### (Thermoplastic Resin)

As the thermoplastic resin, PC/ABS (MB8700) manufactured by Mitsubishi Chemical Corporation was used.

The content of the thermoplastic resin in the master batch is suitably 20% by mass or more and 75% by mass or less, and was set to 60% by mass here.

### (Manufacturing of Regenerated Plastic)

Plastic parts used for the company's own printers and other products were recovered and crushed, and the material obtained was used as [recovered plastic].

Plastic parts used for the company's own printers and other products are mainly parts using PC/ABS (MB8700) manufactured by Mitsubishi Chemical Corporation.

Manufacturing of the regenerated plastic was performed in which the base ratio was 20% by mass of the [master batch] prepared above and 80% by mass of the [recovered plastic]
The [master batch] and the [recovered plastic] were blended in a double-screw extrusion type kneader to manufacture the [regenerated plastic].

For the kneading method, the kneading was carried out by a conventional method at a kneading temperature of 250°C based on the property values of the thermoplastic resin MB8700.

### <Evaluation>

The results of evaluating the quality of the [regenerated plastics] obtained in Example are presented below.
Bending strength: 100 (MPa) [Test method ISO178]
Bending elastic modulus: 8,000 (MPa) [Test Method ISO178]
Charpy impact strength: 3.0 (kJ/m²) [Test Method ISO179]
Flame retardancy: V-1 [UL-94/1.5mm]
Deflection temperature under load: 90 (°C) [Test Method ISO75-2]
Flowability (flowing performance): 15 (g/10min) [MFR method]

Aspects of the present invention are as follows.

In Aspect 1, a master batch comprises:
a thermoplastic resin;
a function-imparting agent; and
recycled carbon fibers recovered from carbon fiber reinforced plastic (CFRP).

In Aspect 2, in the master batch according to Aspect 1, the thermoplastic resin is a virgin material.

In Aspect 3, in the master batch according to Aspect 1 or 2, the recycled carbon fibers are milled fibers.

In Aspect 4, regenerated plastic comprises a base material comprising a mixture of a resin composition and the master batch according to according to any one of Aspects 1 to 3, and the regenerated plastic has a bending elastic modulus of at least 8,000 (MPa).

In Aspect 5, in the regenerated plastic according to Aspect 4, the resin composition contains recovered plastic.

In Aspect 6, in the regenerated plastic according to Aspect 4, the resin composition is a virgin material.

In Aspect 7, the regenerated plastic according to any one of Aspects 4 to 6 has a flame retardancy of V-1 according to UL94 standard.

In Aspect 8, a method of manufacturing regenerated plastic includes mixing a resin composition and a master batch, and the master batch contains:
a thermoplastic resin;
a function-imparting agent that imparts a specific function to the resin composition; and
recycled carbon fibers recovered from carbon fiber reinforced plastic (CFRP).

In Aspect 9, in the method according to Aspect 8, the thermoplastic resin is a virgin material.

In Aspect 10, in the method according to Aspect 8 or 9, the recycled carbon fibers are milled fibers.

In Aspect 11, in the method according to any one of Aspects 8 to 10, the resin composition contains recovered plastic.

In Aspect 12, the method according to any one of Aspects 8 to 11, the resin composition is a virgin material.

Any one of the above-described operations may be performed in various other ways, for example, in an order different from the one described above.

## Claims

1. A master batch (5) comprising:
a thermoplastic resin (4);
a function-imparting agent (2); and
recycled carbon fibers (3) recovered from carbon fiber reinforced plastic.

2. The master batch (5) according to claim 1, wherein the thermoplastic resin (4) is a virgin material.

3. The master batch (5) according to claim 1 or 2, wherein the recycled carbon fibers (3) are milled fibers.

4. Regenerated plastic (10) comprising:
a base material comprising a mixture of a resin composition and the master batch (5) according to any one of claims 1 to 3,
wherein the regenerated plastic (10) has a bending elastic modulus of at least 8,000 (MPa).

5. The regenerated plastic (10) according to claim 4, wherein the resin composition contains recovered plastic (1).

6. The regenerated plastic (10) according to claim 4, wherein the resin composition is a virgin material.

7. The regenerated plastic (10) according to any one of claims 4 to 6, wherein the regenerated plastic (10) has a flame retardancy of V-1 according to UL94 standard.

8. A method of manufacturing regenerated plastic (10), the method comprising:
mixing a resin composition and a master batch (5),
wherein the master batch (5) contains:
a thermoplastic resin (4);
a function-imparting agent (2) that imparts a specific function to the resin composition; and
recycled carbon fibers (3) recovered from carbon fiber reinforced plastic.

9. The method according to claim 8, wherein the thermoplastic resin (4) is a virgin material.

10. The method according to claim 8 or 9, wherein the recycled carbon fibers (3) are milled fibers.

11. The method according to any one of claim 8 to 10, wherein the resin composition contains recovered plastic (1).

12. The method according to any one of claim 8 to 11, wherein the resin composition is a virgin material.
